# EUROPEAN PATENT SPECIFICATION

(11) **EP 1 648 623 B1**
(45) Date of publication and mention of the grant of the patent: **07.11.2007**
(21) Application number: 04741984.1
(22) Date of filing: 09.07.2004
(51) Int. Cl.: B07B 1/22, C05F 17/02

(54) **RIDDLING DEVICE**
SIEBMASCHINE
DISPOSITIF DE CRIBLAGE

(30) Priority: 16.07.2003 IT VI20030142
(43) Date of publication of application: 26.04.2006
(73) Proprietor: SEKO S.p.A., 35010 Curtarolo (Padova) (IT)
(72) Inventor: LOPPOLI, Giuseppe, I-35010 Grantorto (padova) (IT)
(74) Representative: Bonini, Ercole
(86) International application number: PCT/EP2004/051432
(87) International publication number: WO 2005/014186

(56) References cited:
- AT-B- 396 233
- DE-A- 4 301 888
- US-A- 5 021 150

## Description

The present invention is about a device suitable in particular for being used in composting areas, for riddling the material used to prepare the so called "compost".

As it is known, the compost is a fertilizer obtained by mixing together, after being properly ground, solid organic waste and residual vegetable products, like for instance leaves, branches, pruning leavings and the like. The mixture obtained after grinding is left in the open air, where it ferments with the help of aerobic micro-organisms.

Since the waste that can be used to produce compost is often mixed with solid organic waste, that on the contrary has to be discarded, their separation has to be performed before the grinding operation, said separation being obtained by means of riddles.

All the riddles belonging to the prior art, although in their different specific embodiments, substantially comprise a frame which supports a rotating drum, provided with holes on its outer surface, an inlet hole for loading the material to be riddled and an outlet hole for discharging the riddled material.

The drum is coupled with driving means, able to put it in rotation around its longitudinal axis, and it can be provided with means for loading the material to be riddled and with means for collecting the riddled material.

However, the hereby described known riddles have some acknowledged inconveniences.

A first inconvenience is due to the difficulty to accurately clean the drum after its use, this operation being very important because, since the organic nature of the treated material, this one can stay in the holes, obstructing them and becoming putrid.

The cleaning is generally performed by high pressure water jets, and it is complicated by the presence of the frame.

Another known inconvenience is due to the considerable time needed to perform the replacement of the drum. In fact it is known that, according to the kind of material to be riddled, it can be necessary to replace the drum with another having holes of a different size.

In known systems, such replacement operation requires a very long time, because it is necessary to disassemble several machine parts to release the drum from said machine.

In some other cases, to change the size of the riddled material without disassembling the whole drum, the substitution of the perforated surface only, manufactured in this case with removable sectors, is required.

However, also in this case the time required for reassembling the machine is very long.

A further inconvenience of the riddles belonging to the prior art is due to the difficulty of performing maintenance operations for the different riddle components, because of their little accessibility.

The present invention intends to overcome the aforesaid inconveniences.

It is a first object of the present invention to provide for a riddling device which allows to replace the drum, to change the size of the riddled material, in a faster and easier way with respect to the known systems, and without requiring to disassemble whole parts of the machine.

It is another object of the invention to provide for a riddling device which allows to clean the drum in a rapid and effective way after using the riddle.

It is a further object of the invention to provide for a riddling device on which it is easier to perform maintenance operations.

AT 396233 B discloses a riddling device whereby the rotating drum is held on a arm which can be raised up a lowered in order to facilitate loading and discharging of the sieved material.

The above mentioned objects are attained by an embodiment of the riddling device which, according to claim 1, comprises a frame suitable for containing:
- a rotating riddle consisting of a tubular element, mainly longitudinally disposed, provided with holes on its peripheral surface and defining therein an open end for loading the material to be riddled and another open end for unloading the riddled material;
- a driving unit able to put in rotation said riddle around said longitudinal axis;
- support means able to hold up said riddle during rotation;
- loading means to introduce the material to be treated in said rotating riddle through said loading opening;
- conveying means, internally disposed in said rotating riddle, to move forward the material during riddling operation from the loading open end to the unloading open end;
- collecting means, disposed beneath said riddle, able to receive the riddled material;
and it is characterised in that said support means are coupled with actuating means integral with said frame, able to move said riddle from its operative position, above said collecting means, to a rest position, laterally disposed with respect to said operative position.

Advantageously, the presence of actuating means able to move the riddle from its operative position to a lateral rest position, externally disposed with respect to the frame, makes considerably easier to replace and to clean the riddle.

The aforesaid objects and advantages will be better highlighted in the description of a preferred embodiment of the invention, given in an explanatory but not limiting way, with reference to the figures of the annexed drawings, wherein:
- Figure 1 shows an axonometric view of the riddle according to the invention, in operative position;
- Figure 2 shows an axonometric view of the riddle according to the invention, in rest position;
- Figure 3 is a cross sectional view of the riddle of Figure 1, in operative position;
- Figure 4 is a cross sectional view of the riddle of Figure 1, in rest position;
- Figure 5 is a cross sectional view of the driving unit for the riddle of Figure 1; and

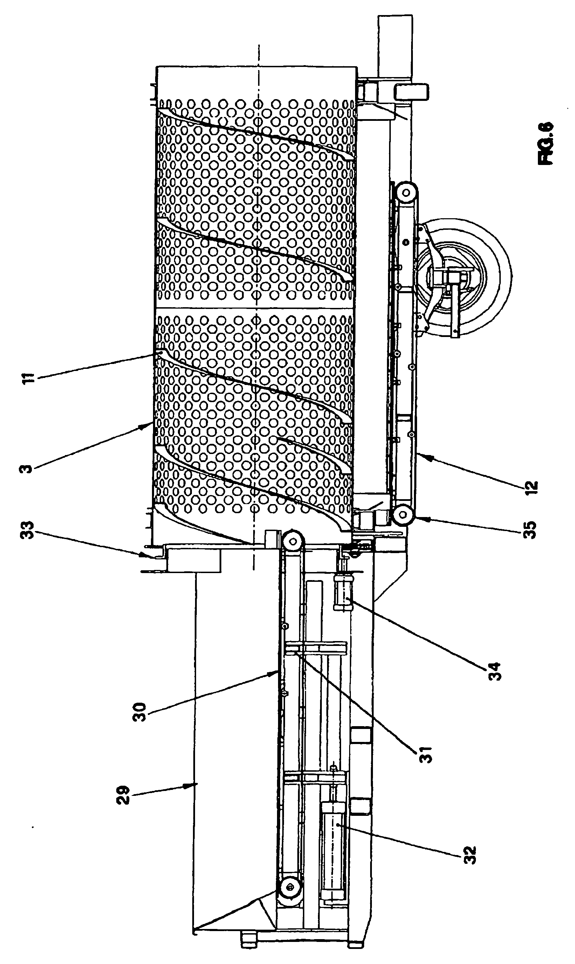

- Figure 6 is a longitudinal sectional view of the riddle of Figure 1.

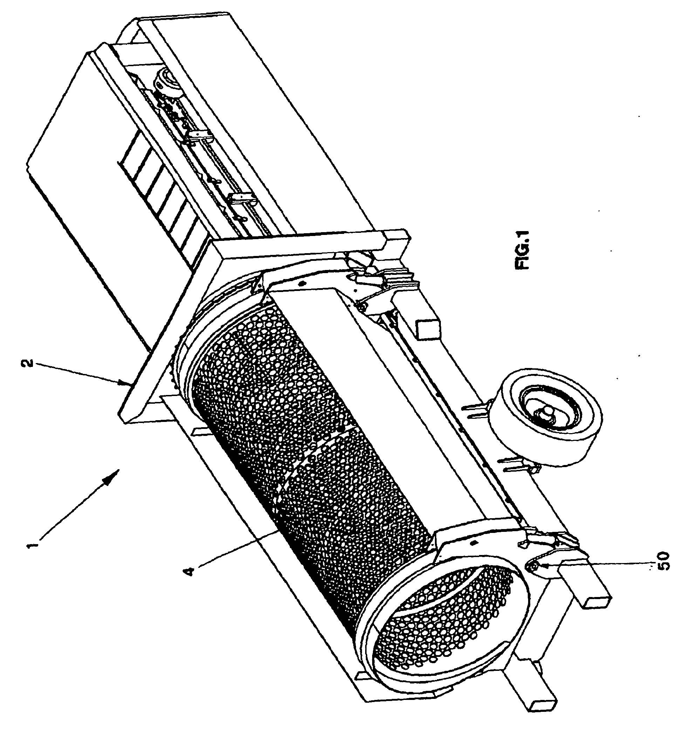

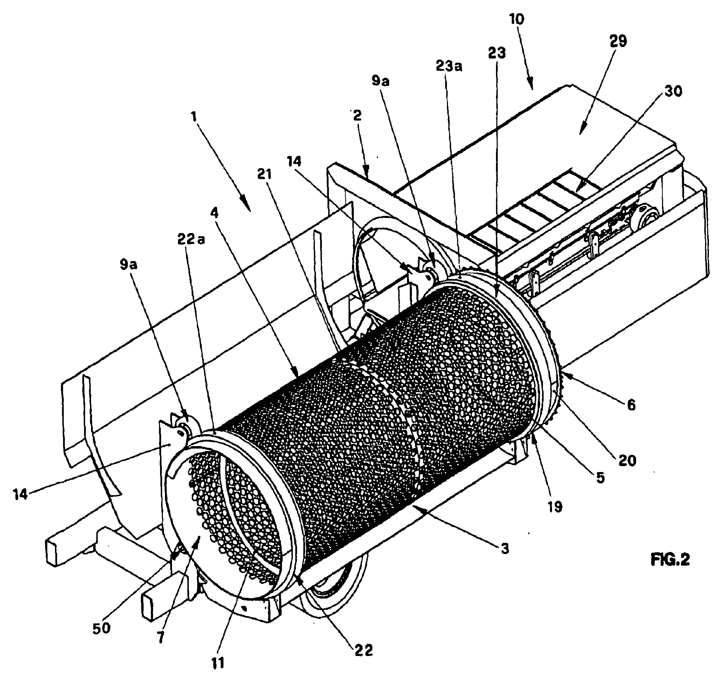

As one can see in Figures 1 and 2, the device according to the invention, generally indicated with numeral **1,** comprises a frame **2** suitable for containing:
- a rotating riddle **3** consisting of a tubular element **4**, mainly longitudinally disposed, provided with holes **5** on its peripheral surface and defining therein an open end **6** for loading the material to be riddled and another open end **7** for unloading the riddled material;
- a driving unit **8** able to put in rotation the riddle **3** around its longitudinal axis;
- support means **9** able to hold up the riddle **3** during rotation;
- loading means **10** to introduce the material to be treated in the rotating riddle **3** through the loading opening **6**;
- conveying means **11,** internally disposed in the rotating riddle **3,** to move forward the material during riddling operation from the loading open end **6** to the unloading open end **7**;
- collecting means **12**, disposed beneath the riddle **3**, able to receive the riddled material.

According to the invention, the above described support means **9** are coupled with fluid actuated means **13** integral with the frame **2**, able to move the riddle **3** from its operative position, above the collecting means **12**, to a rest position, laterally disposed with respect to the operative position.

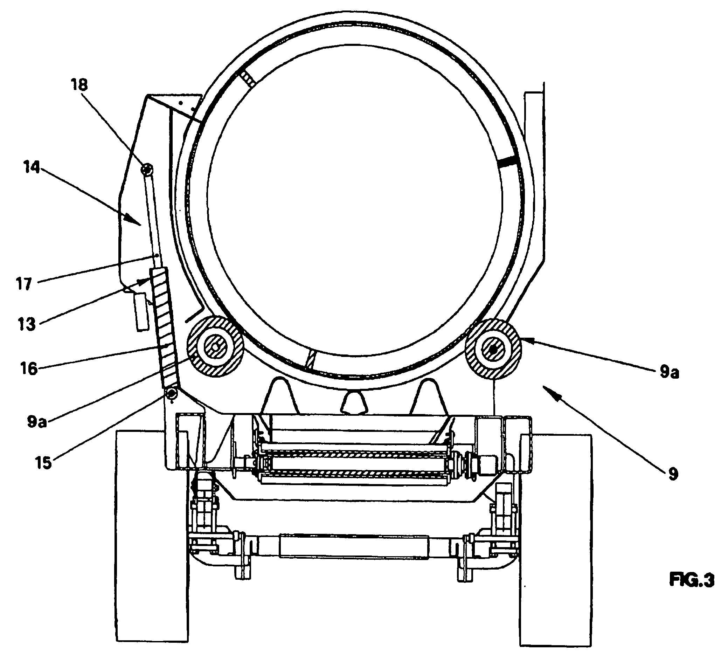

Concerning the support means **9**, as one can see in greater detail in Figures 2 and **3**, they consist of two forks **14**, substantially L-shaped, provided with support rollers **9a** able to support the outer surface of the riddle **3** during rotation.

Each of the forks **14** is provided with a pivoting pin **50** for the connection to the frame **2,** around which it is put in rotation by fluid actuated means **13** that, in the embodiment described hereby, consists of a linear actuator comprising an hydraulic cylinder **16** pivoted to the frame **2** and a rod **17,** whose end is hinged on an intermediate point **18** of the fork **14.**

In particular, one can see that the two pivoting points **15, 18** of the hydraulic cylinder **16** and of the rod's **17** end provide for, in operative conditions, the rod **17** being completely protruding so that, when it is retracted, the return of the rod **17** makes the fork **14** to rotate around its pivoting pin **50.**

At one of the ends of the fork **14** a contrast roller **19** is provided, inserted in a correspondent groove **20** circumferentially obtained out of the tubular element **4,** said contrast roller **19** being able to prevent axial displacements of the riddle **3** during rotation.

Concerning the tubular element or drum **4** which forms the riddle **3,** it consists of a X perforated plate **21,** rolled up according to a substantially cylindrical shape and provided at its ends with two annular flanges **22, 23** which define grooves **22a, 23a** able to receive, during the drum **4** rotation, the support rollers **9a** belonging to the forks **14**.

On the inner surface of the perforated plate **21** a profile **11** is provided, rolled up with helicoidal development and defining a rib able to axially direct the material during riddling from the loading end **6** to the unloading end **7**, exploiting the rotating movement of the drum **4**.

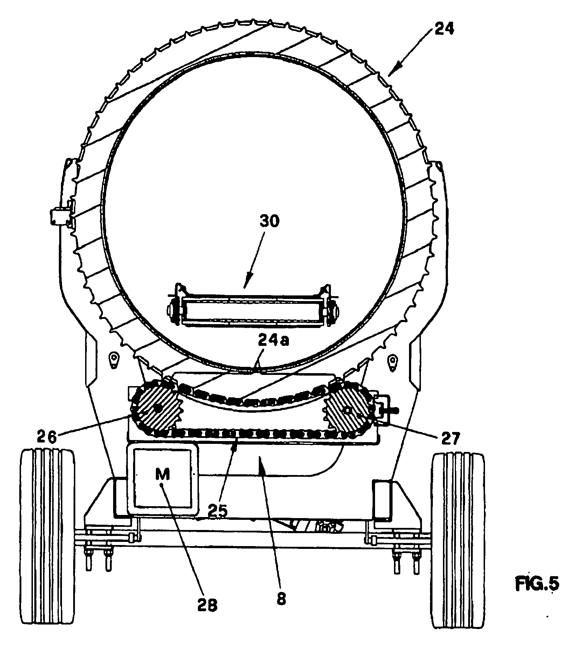

Concerning the driving unit **8**, as shown in Figure 5, it comprises a crown gear **24,** peripherally disposed with respect to the annular flange **23** of the riddle **3**, which engages with a chain **25**, wrapped up as a closed loop between two toothed pinions **26, 27** integral with the frame **2**.

The crown gear **24** is preferably but not necessarily made enbloc with the annular flange **23,** although it is evident that in other embodiments it could be a crown gear mechanically applied to the flange in a stable way or by removable means.

One of the pinions **26, 27** is coupled with driving means **28,** able to put it in rotation to transmit the movement to the chain **25** and consequently to the drum **4**, said means **28** consisting of an oil-pressure motor directly coupled with the pinion's **26, 27** shaft.

In other embodiments, rather than being direct, the coupling could be obtained by the interposition of reduction units.

In Figure 5, one can see that the crown gear **24** engages with the chain **25** at an arc **24a** of its edge, so that the crown gear **24** of the riddle **3** can be released from the engagement with the chain **25** when said riddle **3** is being rotated from the operative position to the rest position, laterally disposed with respect to the frame **2**.

Concerning the loading means **10,** they comprise a hopper **29** integral with the frame **2**, having in its lower portion a conveyor belt **30** coaxially disposed with respect to the riddle **3**.

The conveyor belt **30** is provided with sliding means **31** able to at least partially insert it and to extract it from the riddle **3** in order to exactly unload the material to be riddled in the desired position.

Proper driving means **32,** coupled with sliding means **31** of known type, provide for moving the belt **30**.

Between the hopper **29** and the riddle **3** an annular protection plate **33** is furthermore present, whose section is essentially L-shaped and which partially penetrates into said riddle **3** in operative condition, to prevent part of the material conveyed by the belt **30** to be unloaded in the free area present between the hopper **29** and said riddle **3**.

The annular protection plate **33,** similarly to what described about the conveyor belt **30**, is provided too with driving means **34** able to insert it and to extract it from the riddle **3**.

Concerning the collecting means **12** disposed beneath the riddle **3**, they comprise a conveyor belt **35,** disposed parallel with respect to the longitudinal axis of the riddle **3**.

In the executive embodiment described hereby, the frame **2** which supports the different elements forming the riddle **3** is provided with an axle **36** with two wheels **37, 38**, to allow its motion.

Operatively, the material to be riddled is discharged in the hopper **29** and conveyed therefrom, by means of the belt **30,** inside the drum **4,** where it is discharged on its inner surface.

The rotating movement of the riddle **3** also makes possible the riddling of the material during the movement caused by the helicoidal rib **11,** allowing the particles of smaller size to pass through the holes **5** present on the peripheral surface of the tubular element **4.**

The riddled material is collected beneath the riddle **3**, where it falls by gravity, by means of collecting means **12** able to remove it.

The material which remains inside the riddle **3** forms the rejection, conveyed to the open end **7** of the drum **4** by the helicoidal rib **11** and discharged on collecting means not shown in the drawings, that could be a conveyor belt, a container or a wagon.

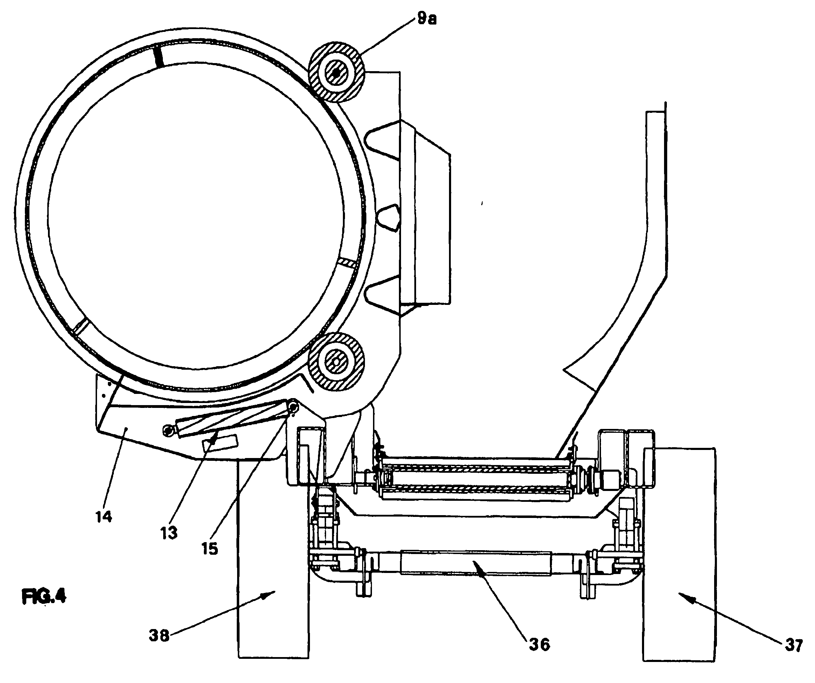

In case of it is necessary to replace the riddle **3**, to use a riddle having riddling surface provided with holes **5** of different size or to perform cleaning operations, the riddle **3** is moved from its operative condition over the collecting means, as shown in Figure 3, to its side rest position, as shown in Figure 4.

Such operation is performed by two preferably but not necessarily hydraulic cylinders **16**, which put in rotation the forks **14,** as shown in Figure 4, when the rod **17** is retracted as previously described.

Now the riddle **3** is released, and it can be easily removed by raising it from the support rollers **9a** on which it is supported, for example by means of a lift truck or a winch.

In case of the device needs to be cleaned and/or maintained, the rest position grants a perfect accessibility to all its components, fully achieving the intended objects.

In order to perform the movement of the riddle **3** from its operative position to its rest position according to the aforementioned procedure, it is necessary that the conveyor belt **30** and the annular protection plate **33** are previously detached from the riddle **3** by the proper driving means **32, 34.**

As shown in Figure 5, the particular structure of the driving unit **8** allows the displacement of the riddle **3**, since the engagement between the chain **25** and the crown **24** does not block the latter when the riddle **3** displacement takes place.

According to what previously explained, it is thus clear that the riddling device **1** of the invention achieves all the intended objects.

In particular, it is achieved the object to provide for a riddling device **1** which allows to replace the riddle **3**, to change the size of the riddled material, in a faster and easier way with respect to the known systems, and without requiring to disassemble whole parts of the machine.

It is achieved the object to provide for a riddling device **1** which allows to perform the cleaning of the drum **4** in a rapid and effective way with respect to the riddles belonging to the prior art.

It is achieved the object to provide for a riddling device **1** on which it is easier to perform maintenance operations, in view of an improved accessibility to the different components of said device **1**.

In the executive stage, modifications and variations, not described and not shown in the drawings, to the riddling device **1** of the invention can be provided.

All the described and any other not cited embodiments, if they fall within the scope of protection of the following claims, should be intended as protected by the present patent.

## Claims

1. A riddling device (1), comprising a frame (2) suitable for containing:
- a rotating riddle (3) consisting of a tubular element (4), mainly longitudinally disposed, provided with holes (5) on its peripheral surface and defining therein an open end (6) for loading the material to be riddled and another open end (7) for unloading the riddled material;
- a driving unit (8) able to put in rotation said riddle (3) around said longitudinal axis;
- support means (9) able to hold up said riddle (3) during rotation;
- loading means (10) to introduce the material to be treated in said rotating riddle (3) through said loading opening (6);
- conveying means (11), internally disposed in said rotating riddle (3), to move forward the material during riddling operation from the loading open end (6) to the unloading open end (7);
- collecting means (12), disposed beneath said riddle (3), able to receive the riddled material;
**characterised in that** said support means (9) are coupled with fluid actuated means (13) integral with said frame (2), able to move said riddle (3) from its operative position, above said collecting means (12), to a rest position, laterally disposed with respect to said operative position.

2. The riddling device (1) according to claim 1) **characterised in that** said support means (9) consist of two or more forks (14), provided with support rollers (9a) able to support the outer surface of said riddle (3) during rotation, each of said forks (14) being provided with a pivoting pin (50) for the connection to said frame (2), around which it is put in rotation by fluid actuated means (13) able to put it in rotation according to a longitudinal axis parallel to the longitudinal axis defined by said riddle (3).

3. The riddling device (1) according to claim 2) **characterised in that** at least one of said forks (14) is provided with one or more contrast roller (19), inserted in a correspondent groove (20) circumferentially obtained out of said tubular element (4), said one or more contrast roller (19) being able to prevent axial displacements of said riddle (3).

4. The riddling device (1) according to claim 2) **characterised in that** said fluid actuated means (13), able to put in rotation said forks (14) of said X X riddle (3), consist of hydraulic cylinders.

5. The riddling device (1) according to claim 3) **characterised in that** said tubular element (4) which forms said riddle (3) consists of a rolled up perforated plate (21), provided at its ends with two annular flanges (22; 23) able to define grooves (22a; 23a) which receive said support rollers (9a) belonging to said forks (14).

6. The riddling device (1) according to claim 1) **characterised in that** said driving unit (8) comprises a crown gear (24), peripherally disposed with respect to said annular flange (23) of said riddle (3), which engages with a chain (25) wrapped up as a closed loop between at least two toothed pinions (26, 27) integral with said frame (2), at least one of said toothed pinions (26, 27) being provided with driving means (28) able to put it in rotation.

7. The riddling device (1) according to one of claims 5) or 6) **characterised in that** said crown gear (24) is made enbloc with said annular flange (23) of said riddle (3).

8. The riddling device (1) according to claim 6) **characterised in that** said crown gear (24) engages with said chain (25) at an arc (24a) of its edge, being said crown gear (24) externally disposed with respect to said closed loop of said chain (25).

9. The riddling device (1) according to claim 1) **characterised in that** said loading means (10) comprise a hopper (29) integral with said frame (2), having in its lower portion a conveyor belt (30) coaxially disposed with respect to said riddle (3).

10. The riddling device (1) according to claim 9) **characterised in that** said conveyor belt (30) is provided with sliding means (31) able to at least partially insert it and to extract it from said riddle (3).

11. The riddling device (1) according to claim 1) **characterised in that** between said loading means (10) and said riddle (3) an annular protection plate (33) is present, provided with driving means (34) able to insert it and to extract it from said riddle (3).

12. The riddling device (1) according to claim 1) **characterised in that** said conveying means (11) consist of at least a rib rolled up with helicoidal development in said riddle (3).

13. The riddling device (1) according to claim 1) **characterised in that** said collecting means (12) disposed beneath said riddle (3) comprise at least a conveyor belt (35), disposed parallel with respect to the longitudinal axis of said riddle (3).

14. The riddling device (1) according to claim 1) **characterised in that** said frame (2) is provided with at least an axle (36) with wheels (37; 38) to allow its motion.

## Patentansprüche

1. Eine Rüttelvorrichtung (1), einen Rahmen (2) umfassend, der geeignet ist, Folgendes zu enthalten:
- ein Drehrüttelsieb (3), bestehend aus einem im Wesentlichen in Längsrichtung angeordneten, röhrenförmigen Element (4) mit Löchern (5) an der peripheren Oberfläche und ein offenes Ende (6) zum Einfüllen des zu rüttelnden Materials sowie ein weiteres, offenes Ende (7) zum Entladen des gerüttelten Materials aufweisend;
- eine Antriebseinheit (8), die geeignet ist, das Rüttelsieb (3) um die Längsachse in Drehung zu versetzen;
- Tragmittel (9) zum Halten des Rüttelsiebs (3) während der Drehung;
- Einfüllmittel (10) zum Einfüllen des zu behandelnden Materials über die Einfüllöffnung (6) in das Drehrüttelsieb (3);
- im Drehrüttelsieb (3) angeordnete Fördermittel (11), die das Material während des Rüttelns vom offenen Ende (6) für die Einfüllung bis zum offenen Ende (7) fur die Entladung vorwärts bewegen;
- Auffangmittel (12) unter dem Rüttelsieb (3) zur Aufnahme des gerüttelten Materials;
**dadurch gekennzeichnet, dass** die Tragmittel (9) mit mediumbetätigten Mittel (13) gekoppelt sind, die mit dem Rahmen (2) eine Einheit bilden und geeignet sind, das Rüttelsieb (3) aus seiner Arbeitsposition über den Aufnahmemitteln (12) in eine seitlich von der Arbeitsposition befindliche Ruheposition zu bewegen.

2. Die Rüttelvorrichtung (1) gemäß Patentanspruch 1), **dadurch gekennzeichnet, dass** die Tragmittel (9) aus zwei oder mehreren Gabeln (14) bestehen, welche mit Tragrollen (9a) versehen sind, die in der Lage sind, die Außenfläche des Rüttelsiebs (3) während der Drehung zu stützen, wobei jede der Gabeln (14) einen Drehzapfen (50) für die Verbindung mit dem Rahmen (2) aufweist, um welchen sie durch mediumbetätigte Mittel (13) in Drehung versetzt wird, die geeignet sind, sie gemäß einer zur durch das Rüttelsieb (3) definierten Längsachse parallel stehenden Längsachse drehen zu lassen.

3. Die Rüttelvorrichtung (1) gemäß Patentanspruch 2), **dadurch gekennzeichnet, dass** wenigstens eine der Gabeln (14) mit einer oder mehreren Gegenrollen (19) versehen ist, welche in eine entsprechende Rille (20) eingesetzt sind, die am Umfang des röhrenförmigen Elements (4) gewonnen wurde, wobei diese eine oder mehreren Gegenrollen (19) in der Lage sind, axiale Bewegungen des Rüttelsiebs (3) zu verhindern.

4. Die Rüttelvorrichtung (1) gemäß Patentanspruch 2), **dadurch gekennzeichnet, dass** die mediumbetätigten Mittel (13), die geeignet sind, die Gabeln (14) des Rüttelsiebs (3) in Drehung zu versetzen, hydraulische Zylinder sind.

5. Die Rüttelvorrichtung (1) gemäß Patentanspruch 3), **dadurch gekennzeichnet, dass** das röhrenförmige Element (4), welches das Rüttelsieb (3) bildet, aus einer aufgerollten, gelochten Platte (21) besteht, die an ihren Enden mit zwei ringförmigen Flanschen (22; 23) versehen ist, die geeignet sind, Rillen (22a; 23a) zu definieren, welche die zu den Gabeln (14) gehörigen Tragrollen (9a) aufnehmen.

6. Die Rüttelvorrichtung (1) gemäß Patentanspruch 1), **dadurch gekennzeichnet, dass** die Antriebseinheit (8) einen Zahnkranz (24) umfasst, der peripher bezüglich des ringförmigen Flansches (23) des Rüttelsiebs (3) angeordnet ist und in eine Kette (25) eingreift, die in geschlossenem Kreis zwischen wenigstens zwei Zahnritzeln (26, 27) gewunden ist, die mit dem Rahmen (2) eine Einheit bilden, wobei wenigstens einer der Zahnritzel (26, 27) Antriebsmittel (28) aufweist, die geeignet sind, ihn in Drehung zu versetzen.

7. Die Rüttelvorrichtung (1) gemäß Patentanspruch 5) oder 6), **dadurch gekennzeichnet, dass** der Zahnkranz (24) aus einem Stück mit dem ringförmigen Flansch (23) des Rüttelsiebs (3) gefertigt ist.

8. Die Rüttelvorrichtung (1) gemäß Patentanspruch 6), **dadurch gekennzeichnet, dass** der Zahnkranz (24) in die Kette (25) eingreift an einem Bogen (24a) ihrer Kante, wobei der Zahnkranz (24) außerhalb des geschlossenen Kreises der Kette (25) positioniert ist.

9. Die Rüttelvorrichtung (1) gemäß Patentanspruch 1), **dadurch gekennzeichnet, dass** die Einfüllmittel (10) einen Trichter (29) umfassen, der eine Einheit mit dem Rahmen (2) bildet und in seinem unteren Teil ein Förderband (30) aufweist, das koaxial zum Rüttelsieb (3) positioniert ist.

10. Die Rüttelvorrichtung (1) gemäß Patentanspruch 9), **dadurch gekennzeichnet, dass** das Förderband (30) Schiebemittel (31) aufweist, die geeignet sind, es zumindest teilweise in das Rüttelsieb (3) einzuführen und wieder herauszuziehen.

11. Die Rüttelvorrichtung (1) gemäß Patentanspruch 1), **dadurch gekennzeichnet, dass** sich zwischen den Einfüllmitteln (10) und dem Rüttelsieb (3) eine ringförmige Abdeckplatte (33) befindet mit Antriebsmitteln (34), die geeignet sind, sie in das Rüttelsieb (3) einzuführen und wieder herauszuziehen.

12. Die Rüttelvorrichtung (1) gemäß Patentanspruch 1), **dadurch gekennzeichnet, dass** die Fördermittel (11) aus wenigstens einer mit schraubenförmiger Entwicklung aufgerollten Rippe im Rüttelsieb (3) bestehen.

13. Die Rüttelvorrichtung (1) gemäß Patentanspruch 1), **dadurch gekennzeichnet, dass** die unter dem Rüttelsieb (3) angeordneten Auffangmittel (12) wenigstens ein Förderband (35) umfassen, das parallel zur Längsachse des Rüttelsiebs (3) verläuft.

14. Die Rüttelvorrichtung (1) gemäß Patentanspruch 1), **dadurch gekennzeichnet, dass** der Rahmen (2) wenigstens eine Tragachse (36) mit Rädern (37; 38) umfasst, um bewegt werden zu können.

## Revendications

1. Un dispositif de criblage (1), comprenant un châssis (2) indiqué pour contenir:
- un crible tournant (3) se composant d'un élément tubulaire (4), disposé essentiellement d'une manière longitudinale, muni de trous (5) sur sa surface périphérique et définissant sur celui-ci une extrémité ouverte (6) pour le chargement du matériel à cribler et une autre extrémité ouverte (7) pour le déchargement du matériel criblé;
- une unité de motorisation azionamento (8) apte à faire tourner ledit crible (3) autour dudit axe longitudinal;
- des moyens de support (9) indiqués pour soutenir ledit crible (3) durant la rotation;
- des moyens de chargement (10) aptes à introduire le matériel à traiter dans ledit crible tournant (3) à travers ladite ouverture de chargement (6);
- des moyens de transport (11), disposés à l'intérieur dudit crible tournant (3) aptes à faire avancer le matériel durant l'opération de criblage de l'extrémité ouverte de chargement (6) à l'extrémité ouverte de déchargement (7);
- des moyens de réception (12) disposés au-dessous dudit crible (3), aptes à recevoir le matériel criblé;
**caractérisé en ce que** lesdits moyens de support (9) sont couplés avec des moyens actionnés par fluide (13) solidaires dudit châssis (2), indiqués pour déplacer ledit crible (3) de sa position de fonctionnement, au-dessus desdits moyens de réception (12), à une position de repos, disposée latéralement par rapport à ladite position de fonctionnement.

2. Le dispositif de criblage (1) selon la revendication 1) **caractérisé en ce que** lesdits moyens de support (9) se composent de deux ou plusieurs fourches (14), équipées de rouleaux de support (9a) aptes à soutenir la surface extérieure dudit crible (3) durant la rotation, chacune desdites fourches (14) étant fournie d'un goujon pivotant (50) pour le raccordement dudit châssis (2), autour duquel elle est mise en rotation par des moyens actionnés par fluide (13) indiqués pour la mettre en rotation selon un axe longitudinal parallèle à l'axe longitudinal défini par ledit crible (3).

3. Le dispositif de criblage (1) selon la revendication 2) **caractérisé en ce qu'**au moins une desdites fourches (14) est munie d'un ou plusieurs rouleaux de contraste (19), insérés dans une cannelure correspondante (20) obtenue d'une manière circonférentielle à l'extérieur dudit élément tubulaire (4), ledit un ou plusieurs rouleaux de contraste (19) étant indiqués pour empêcher des déplacements axiaux dudit crible (3).

4. Le dispositif de criblage (1) selon la revendication 2) **caractérisé en ce que** lesdits moyens actionnés par fluide (13), aptes à mettre en rotation lesdites fourches (14) dudit crible (3), se composent de cylindres hydrauliques.

5. Le dispositif de criblage (1) selon la revendication 3) **caractérisé en ce que** ledit élément tubulaire (4) qui forme ledit crible (3) consiste d'une plaque perforée enroulée (21) munie sur ses extrémités de deux brides annulaires (22; 23) aptes à définir des cannelures (22a; 23a) qui reçoivent lesdits rouleaux de support (9a) appartenant auxdites fourches (14).

6. Le dispositif de criblage (1) selon la revendication 1) **caractérisé en ce que** ladite unité de motorisation (8) comprend une couronne dentée (24), disposée d'une manière périphérique par rapport à ladite bride annulaire (23) dudit crible (3), qui s'engrène avec une chaîne (25) enroulée en anneau fermé entre au moins deux pignons dentés (26, 27) solidaires dudit châssis (2), au moins un desdits pignons (26, 27) étant équipé de moyens de motorisation (28) indiqués pour le mettre en rotation.

7. Le dispositif de criblage (1) selon l'une des revendications 5) ou 6) **caractérisé en ce que** ladite couronne dentée (24) est réalisée en bloc unique avec ladite bride annulaire (23) dudit crible (3).

8. Le dispositif de criblage (1) selon la revendication 6) **caractérisé en ce que** ladite couronne dentée (24) s'engrène avec ladite chaîne (25) à hauteur d'un arc (24a) de son bord, ladite couronne dentée (24) étant disposée à l'extérieur par rapport audit anneau fermé de ladite chaîne (25).

9. Le dispositif de criblage (1) selon la revendication 1) **caractérisé en ce que** lesdits moyens de chargement (10) comprennent une trémie (29) solidaire dudit châssis (2), ayant dans sa partie inférieure une courroie transporteuse (30) disposée d'une manière coaxiale par rapport audit crible (3).

10. Le dispositif de criblage (1) selon la revendication 9) **caractérisé en ce que** ladite courroie transporteuse (30) est fournie de moyens de coulissement (31) aptes à l'insérer au moins partiellement et à l'extraire dudit crible (3).

11. Le dispositif de criblage (1) selon la revendication 1) **caractérisé en ce qu'**entre lesdits moyens de chargement (10) et ledit crible (3) une plaque de protection annulaire (33) est présente, qui est équipée de moyens de motorisation (34) aptes à l'insérer et à l'extraire dudit crible (3).

12. Le dispositif de criblage (1) selon la revendication 1) **caractérisé en ce que** lesdits moyens de transport (11) consistent d'au moins une nervure enroulée d'une manière hélicoïdale dans ledit crible (3).

13. Le dispositif de criblage (1) selon la revendication 1) **caractérisé en ce que** lesdits moyens de réception (12) disposés au-dessous dudit crible (3) comprennent au moins une courroie transporteuse (35), disposée parallèlement par rapport à l'axe longitudinal dudit crible (3).

14. Le dispositif de criblage (1) selon la revendication 1) **caractérisé en ce que** ledit châssis (2) est équipé d'au moins un essieu (36) avec roues (37; 38) pour consentir son mouvement.
